# EUROPÄISCHE PATENTSCHRIFT

(11) **EP 3 581 910 B1**
(45) Veröffentlichungstag und Bekanntmachung des Hinweises auf die Patenterteilung: **26.08.2020**
(21) Anmeldenummer: 18177837.4
(22) Anmeldetag: 14.06.2018
(51) Int. Cl.: F16C 19/06, F16C 19/54, G01M 13/04, F16C 41/00, G01D 5/347

(54) **DREHGEBER FÜR SCHIENENFAHRZEUGE**
ROTARY ENCODER FOR RAIL VEHICLES
CODEUR ROTATIF POUR VEHICULES FERROVIAIRES

(43) Veröffentlichungstag der Anmeldung: 18.12.2019
(73) Patentinhaber: Baumer Electric AG, 8500 Frauenfeld (CH)
(72) Erfinder: Tille, Dierk, 78464 Konstanz (CH); Hohl, Michael, 8405 Winterthur (CH)
(74) Vertreter: Strauss, Steffen

(56) Entgegenhaltungen:
- EP-A1- 3 108 996
- EP-A2- 1 672 327
- EP-A2- 2 662 666

## Beschreibung

Die Erfindung betrifft einen eigengelagerten Drehgeber für Schienenfahrzeuge zur Erfassung einer rotatorischen Lage und/oder Lageänderung der Achse eines Schienenfahrzeuges, umfassend ein Drehgebergehäuse zur Befestigung des Drehgebers am Schienenfahrzeug, eine erste, gegenüber dem Drehgebergehäuse drehbar gelagerte Abtastkomponente, eine zweite, stationär zum Drehgebergehäuse angeordnete Abtastkomponente und eine im Drehgebergehäuse aufgenommene Lagermechanik, mit einer Welle und wenigstens einem die Welle drehbar im Drehgebergehäuse lagernden Rotationslager, wobei die Welle die erste Abtastkomponente trägt.

Drehgeber sind aus dem Stand der Technik bekannt und werden dafür verwendet, eine rotatorische Lage und/oder Lageänderung der Achsen von Schienenfahrzeugen zu ermitteln. Die Drehgeber sind fest mit dem Schienenfahrzeug verbunden, sodass bei einem Defekt des Drehgebers dieser vom Schienenfahrzeug abmontiert werden muss, wobei ferner Anschlusskabel am Drehgeber verbleiben. Ein Transport eines solchen abmontierten Drehgebers zur Untersuchung bzw. Revision oder Reparatur ist aufgrund der starren und sperrigen Kabel umständlich, aufwendig und kostenintensiv. Damit das Schienenfahrzeug weiter einsatzbereit ist, muss zudem ein neuer Drehgeber an diesem verbaut werden.

Die EP 1 672 327 A2 offenbart eine Winkelmesseinrichtung, die eine Welle zum Anschluss an einen zu messenden Körper aufweist. Die Winkelmesseinrichtung wird über eine Kappe an einem weiteren Körper mit Hilfe von Flanschbohrungen befestigt. Der zu messende Körper ist beispielsweise eine Motorwelle. Die Winkelmesseinrichtung umfasst einen Grundkörper. Die Welle ist im Grundkörper mit Hilfe von Lagern drehbar gelagert, wobei an der Welle eine im Inneren der Winkelmesseinrichtung angeordneten Codescheibe befestigt ist.

Die EP 2 662 666 A2 offenbart eine Positionsmesseinrichtung in Form eines Winkelmesssystems, die eine Massverkörperung und eine Abtasteinheit aufweist. Die Massverkörperung ist um eine Achse drehbar gelagert mittels eines Drehlagers. Die Positionsmesseinrichtung weist weiterhin ein Gehäuse auf, in welchem die Massverkörperung mit der Messteilung und die Abtasteinheit angeordnet ist.

Die EP 3 108 996 A1 betrifft eine Vorrichtung zum Messen von Verlagerungen eines rotierenden Objektes. Die Vorrichtung umfasst einen Rotor zur Ankopplung an eine zu messende Spindel, wobei der Rotor drehbar in einem Zwischenteil gelagert ist. Zwischen dem Zwischenteil und dem Rotor ist ein Radiallager angeordnet. Die Vorrichtung umfasst weiterhin einen Stator der zum Messen der Verlagerungen ortsfest an der Basis fixiert wird. Die Vorrichtung enthält Messmittel zum Messen von Verlagerungen des Zwischenteils gegenüber dem Stator. Jedes Messmittel besteht jeweils aus einer Massverkörperung und einem Abtastkopf.

Aufgabe der vorliegenden Erfindung ist es, einen Drehgeber bereitzustellen, der eine einfache und kostengünstige Wartung und/oder Reparatur ermöglicht.

Der eingangs erwähnte Drehgeber löst die obige Aufgabe dadurch, dass die Lagermechanik und die erste Abtastkomponente zu einem einteilig in das Drehgebergehäuse einsetzbaren und/oder einteilig vom Drehgebergehäuse entfernbaren Lagermodul vereint sind.

Dies hat den Vorteil, dass bei einem Defekt nicht der gesamte Drehgeber vom Schienenfahrzeug abmontiert werden muss. In der Vielzahl der Fälle sind es die dem Verschleiß unterliegenden, mechanisch bewegten Bauteile des Drehgebers, bei denen ein Defekt auftritt. Somit bestimmen diese Teile oftmals die Lebensdauer der eigengelagerten Drehgeber. Insbesondere ein Schmiermittel wie beispielsweise das Fett der Rotationslager (Wälzlager, Kugellager) unterliegt durch den ständigen Gebrauch einem permanenten Verschleiß. Während des Betriebes des Drehgebers erfolgt keine Zugabe zusätzlichen Schmiermittels, sodass für die gesamte Lebensdauer nur jene Menge an Schmiermittel zur Verfügung steht, die bei der Produktion des Drehgebers im Rotationslager vorhanden war. Menge an Schmiermittel zur Verfügung steht, die bei der Produktion des Drehgebers im Rotationslager vorhanden war.

Der erfindungsgemäße Drehgeber erlaubt es, im Gegensatz zu den Lösungen aus dem Stand der Technik, lediglich alle mechanisch bewegten Teile auf einfache Weise aus dem Drehgeber zu entfernen, da die mechanisch bewegten Teile allesamt im Lagermodul angeordnet sind. Die stationären Bauelemente des Drehgebers müssen somit nicht für eine Revision und/oder Wartung bzw. Austausch versandt werden. Dadurch ist eine vereinfachte Wartung bzw. ein vereinfachter Austausch der verschleißanfälligen Rotationslager möglich. Ein solcher Austausch kann direkt durch den Kunden durchgeführt werden.

Nach erfolgtem Austausch des Lagermoduls und Montage des Drehgebers kann das Schienenfahrzeug sofort wieder einsatzbereit sein.

Ferner kann die vergleichsweise kleine und einfache Baugruppe (im Vergleich zum gesamten Drehgeber inklusive Anschlusskabel) einfacher und kostengünstiger zwischen dem Kunden und Hersteller transportiert werden, um beispielsweise eine Revision oder Wartung der mechanisch bewegten Teile durchzuführen.

Der erfindungsgemäße Drehgeber kann durch die im Folgenden beschriebenen, jeweils für sich vorteilhaften Ausgestaltungen weiter verbessert werden. Die technischen Merkmale der beispielhaften weiteren Ausgestaltungen können dabei beliebig miteinander kombiniert werden ebenso können technische Merkmale weggelassen werden, sofern es bei der Erfindung nicht auf den mit dem weggelassenen technischen Merkmal erzielten technischen Effekt ankommt.

In einer Ausgestaltung des erfindungsgemäßen Drehgebers kann das Lagermodul bei am Schienenfahrzeug befestigtem Drehgeber in das Drehgebergehäuse einsetzbar und/oder vom Drehgebergehäuse entfernbar ausgestaltet sein. Dies hat den Vorteil, dass zur Wartung oder zum Austausch des Lagermoduls lediglich dieses vom Drehgeber entfernt werden muss, wobei die stationären Bauelemente des Drehgebers, wie beispielsweise das Drehgebergehäuse, am Schienenfahrzeug verbaut bleiben können. In dieser Ausgestaltung des Drehgebers kann eine zusätzliche Zugriffsicherung, beispielsweise durch Spezialschrauben oder Verriegelungen vorgesehen sein, um unbefugten Zugriff auf das Lagermodul zu erschweren oder zu verhindern.

Eine Lageraufnahme zur Aufnahme des Lagermoduls kann folglich entweder von einer dem Schienenfahrzeug zugewandten Seite oder von einer dem Schienenfahrzeug abgewandten Seite des Drehgebers zugänglich sein. Entsprechend kann das Lagermodul bei abmontiertem Drehgeber, bzw. bei am Schienenfahrzeug montiertem Drehgeber entnommen bzw. eingesetzt werden.

Die dem Schienenfahrzeug zugewandte Seite ist jene Seite des Drehgebers, die Befestigungsmittel zur Befestigung des Drehgebers an einem Schienenfahrzeug aufweist. Die gegenüberliegende Seite des Drehgebers kann folglich als die dem Schienenfahrzeug abgewandte Seite definiert werden.

In einer weiteren Ausgestaltung kann die erste Abtastkomponente eine Massverkörperung und die zweite Abtastkomponente eine Abtastelektronik oder die erste Abtastkomponente eine Abtastelektronik und die zweite Abtastkomponente eine Massverkörperung sein.

Die Kombination der Massverkörperung mit der Abtastelektronik ist als Winkellagegeber zu verstehen. Der Winkellagegeber weist bevorzugt eine abgetastete Komponente, beispielsweise die Massverkörperung, und eine abtastende Komponente, beispielsweise die Abtastelektronik auf.

Somit kann die, die rotatorische Lage und/oder Lageänderung der Achse des Schienenfahrzeuges repräsentierende rotatorische Lage und/oder Lageänderung der Massverkörperung mittels der Abtastelektronik erfasst werden. Eine solche Erfassung erfolgt bevorzugt berührungslos.

In einer bevorzugten Ausgestaltung ist die Massverkörperung bewegungsübertragend mit der Welle des Lagermoduls verbunden und dessen Rotation wird von der stationären Abtastelektronik abgetastet.

Das zuvor erwähnte Rotationslager kann ein Walzen- oder Kugellager sein.

Das Drehgebergehäuse kann mittels aus dem Stand der Technik bekannter Vorrichtungen bzw. Verfahren am Schienenfahrzeug befestigt sein, beispielsweise durch Schrauben, Nieten, Bolzen, Klammern und dergleichen.

In einer vorteilhaften Ausgestaltung kann das Lagermodul am Drehgebergehäuse wiederholt lösbar befestigt sein. Die Möglichkeit, das Lagermodul wiederholt vom Drehgebergehäuse zu lösen und insbesondere wieder an diesem zu befestigen, beispielsweise durch Standardschrauben, ermöglicht es, die Lebensdauer des Drehgebers zu erhöhen, indem die besonders anfälligen, mechanisch bewegten Teile für eine Wartung aus dem Drehgebergehäuse entnehmbar sind.

Ebenso ist es denkbar, dass das Lagermodul in einer weiteren Ausgestaltung des Drehgebers in eine Aufnahme des Drehgebergehäuses eingeschraubt ist. Dies hat den Vorteil, dass keine zusätzlichen Befestigungsmittel notwendig sind, um das Lagermodul mit dem Drehgebergehäuse zu befestigen.

Hierzu kann das Lagermodul zylinderförmig sein und ein Außengewinde aufweisen.

Bevorzugt kann das Lagermodul ferner eine Positionssicherung aufweisen, die bei erreichter, eingeschraubter Position des Lagermoduls in das Drehgebergehäuse ein versehentliches Herausschrauben, beispielsweise durch Vibrationen, zuverlässig verhindert.

In einer weiteren vorteilhaften Ausgestaltung des erfindungsgemäßen Drehgebers kann die Welle des am Drehgebergehäuse befestigten Lagermoduls zumindest einen exzentrisch zur Welle angebrachten Antriebsstift oder eine zentrisch zur Welle befestigte Gabel aufweisen, mit welchem/welcher eine Rotation der Achse des Schienenfahrzeuges auf die Welle des Lagermoduls übertragbar ist.

Sowohl der Antriebsstift als auch die befestigte Gabel sind aufgrund einer mechanischen, insbesondere abrasiven Belastung bei der Übertragung der Rotation der Achse des Schienenfahrzeuges auf die Welle des Drehgebers verschleißanfällig. In dieser Ausgestaltung können diese Bauteile somit mitsamt dem Lagermodul vom Drehgebergehäuse entfernt, und folglich ausgetauscht oder gewartet werden.

Der erfindungsgemäße Drehgeber kann weiter dadurch verbessert werden, dass das Lagermodul ein abgedichtetes Modulgehäuse aufweist. Dies hat den Vorteil, dass insbesondere die mechanisch bewegten Bauteile und/oder elektrische Elemente der Abtastelektronik von äußeren Umwelteinflüssen abgeschirmt und somit vor diesen geschützt sind. Ferner kann besonders bevorzugt insbesondere das Drehgebergehäuse selbst zusätzlich abgedichtet sein.

Bei entferntem Lagermodul und geöffneten Modulgehäuse kann das Rotationslager bevorzugt von außen zugänglich angeordnet sein. Insbesondere kann das Rotationslager unmittelbar zugänglich und/oder abziehbar angeordnet sein. Dies erlaubt einen schnellen Überblick über den Zustand der mechanisch bewegten Teile des Lagermoduls und somit eine schnelle Entscheidung, ob die mechanisch bewegten Teile gewartet oder ersetzt werden sollten.

In einer weiteren vorteilhaften Ausgestaltung des erfindungsgemäßen Drehgebers befindet sich die erste Abtastkomponente in einem geschlossenen Zustand des Modulgehäuses zumindest abschnittsweise außerhalb von diesem. Die erste Abtastkomponente, beispielsweise die Massverkörperung, kann auf der Welle gelagert außerhalb des Modulgehäuses angeordnet sein, wobei die Welle abgedichtet durch das Modulgehäuse hindurch tritt und im Inneren des Modulgehäuses gelagert sein kann.

Bevorzugt kann die erste Abtastkomponente wiederholt lösbar am aus dem Modulgehäuse ragenden Ende der Welle befestigbar sein.

Der erfindungsgemäße Drehgeber, insbesondere der Winkellagegeber kann ein Inkrementalgeber oder ein Absolutwertgeber sein. Bei der Verwendung eines Inkrementalgebers kann die Ausrichtung des Lagermoduls beim (wieder) Einsetzen beliebig gewählt werden.

In einer weiteren vorteilhaften Ausgestaltung kann das Lagermodul dagegen in mindestens einer vorbestimmten rotatorischen Stellung in das Lagergehäuse einsetzbar sein. Insbesondere ist es vorteilhaft, wenn genau eine solche vorbestimmte rotatorische Stellung vorab festgelegt ist. Dies erlaubt die Detektion einer absoluten Winkelposition auch nach (erneutem) Einsetzen des Lagermoduls. Diese Ausgestaltung des Drehgebers kann bevorzugt für Absolutwertgeber verwendet werden.

In einer weiteren Ausgestaltung des erfindungsgemäßen Drehgebers kann die Abtastelektronik datenübertragend mit einem Zustandssensor zur Erkennung eines entfernten oder eingesetzten Lagermoduls verbunden sein, wobei die Abtastelektronik ein Einstellautomatik-Modul aufweist und wobei das Einstellautomatik-Modul ausgestaltet ist nach einem Einsetzen oder Wiedereinsetzen eines Lagermoduls eine automatische Kalibrierung durchzuführen.

Die Kalibrierung von Drehgeber ist aus dem Stand der Technik bekannt und kann beispielsweise durch das Übertragen von, für den jeweiligen Drehgeber bestimmten Systemparametern zur Durchführung der Offset- und Amplitudenregelung im Betrieb erreicht werden. Dies geschieht für gewöhnlich während der Produktion des Drehgebers. Diese Kalibrierung muss jedoch wiederholt werden, wenn sich die relative Lage zwischen der ersten Abtastkomponente und der zweiten Abtastkomponente ändert. Dies ist der Fall, wenn das Lagermodul ausgetauscht bzw. neu in das Drehgebergehäuse eingesetzt wird.

Erfindungsgemäß können der Drehgeber und insbesondere das Lagermodul mit geringen Fertigungstoleranzen ausgestaltet sein. Dies kann es ermöglichen, das Lagermodul auszutauschen, ohne dass sich die relative Lage zwischen der ersten Abtastkomponente und der zweiten Abtastkomponente über vorab festgelegte Grenzwerte hinaus ändert.

Durch die Möglichkeit der automatischen Kalibrierung nach dem Einsetzen oder Wiedereinsetzen des Lagermoduls können die notwendigen Fertigungstoleranzen für das Lagermodul und/oder das Drehgebergehäuse geringer angesetzt werden, was die Produktionskosten senken kann.

Ferner kann das Einstellautomatik-Modul alternativ oder zusätzlich einen Dateneingang zur Einspeisung von Kalibrationsdaten an das Einstellautomatik-Modul aufweisen. Sofern die Kalibration des Drehgebers nicht vollständig autark durch den Drehgeber selbst erfolgten soll, kann mit dieser Ausgestaltung eine Abgleichung bzw. Kalibrierung des Drehgebers von extern erfolgen. Hier kann beispielsweise ein PC mit der Elektronik des Drehgebers über den Dateneingang verbunden sein und die notwendigen Parameter zur Kalibration berechnen oder ermitteln und diese an die Elektronik des Drehgebers übertragen und in dieser speichern. Die Datenübertragung kann kabelgebunden oder kabellos erfolgen.

Insbesondere kann der Dateneingang zur Einspeisung von Kalibrationsdaten auch dann zugänglich sein, wenn der Drehgeber am Schienenfahrzeug befestigt ist.

Im Folgenden soll die Erfindung anhand beispielhafter Zeichnungen näher erläutert werden. Die Zeichnungen stellen lediglich eine beispielhafte Ausgestaltung der Erfindung dar. In den Zeichnungen gezeigte technische Merkmale können beliebig miteinander kombiniert und/oder weggelassen werden, sofern es nicht auf dem mit dem weggelassenen technischen Merkmal erzielten technischen Effekt ankommt. Gleiche technische Merkmale und technische Merkmale gleicher Funktion werden dabei mit dem gleichen Bezugszeichen versehen. Auf sich wiederholende Beschreibungen wird verzichtet.

Es zeigen:
Fig. 1 einen erfindungsgemäßen Drehgeber mit eingesetztem Lagermodul;
Fig. 2 den erfindungsgemäßen Drehgeber der Fig. 1 mit entferntem Lagermodul; und
Fig. 3 den erfindungsgemäßen Drehgeber der Fig. 1 und 2 in geschnittener Ansicht.

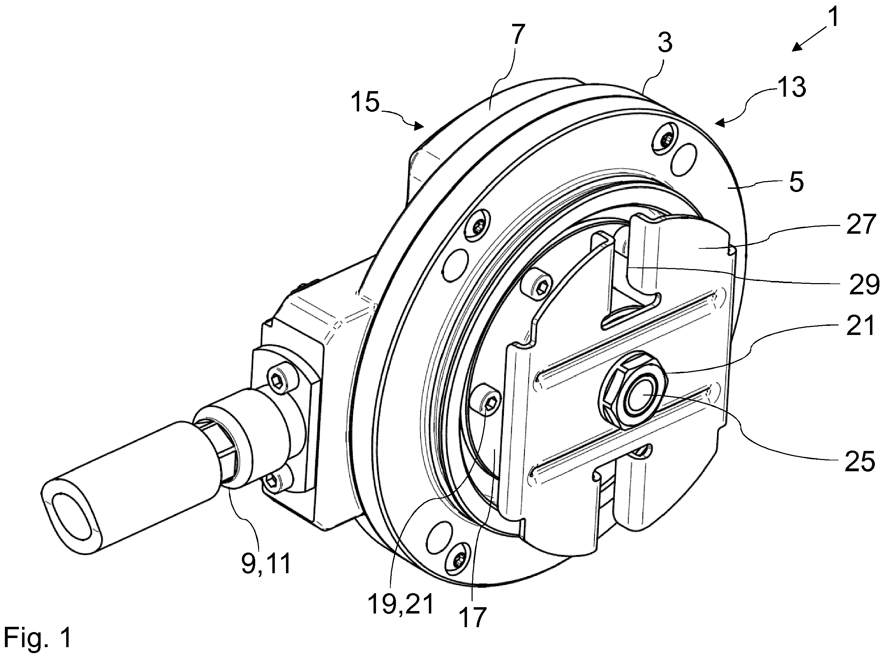

In Fig. 1 ist ein erfindungsgemäßer Drehgeber 1 gezeigt. Dieser weist ein Drehgebergehäuse 3 auf, welches sich aus einem Boden 5 und einem Deckel 7 zusammensetzt.

Am Deckel 7 ist eine Anschlussvorrichtung 9 in Form einer Steckeraufnahme 11 gezeigt. Über diese Anschlussvorrichtung 9 können mittels (nicht gezeigter) Kabel, Messdaten des Drehgebers 1 abgegriffen und/oder Kalibrationsdaten für die Kalibrierung übermittelt werden.

In der perspektivischen Ansicht ist eine dem Schienenfahrzeug zugewandte Seite 13, oder kurz Innenseite 13 gezeigt, welche im montierten Zustand dem Schienenfahrzeug (nicht gezeigt) zugewandt ist. Der Innenseite 13 liegt eine dem Schienenfahrzeug abgewandten Seite oder kurz Außenseite 15 gegenüber.

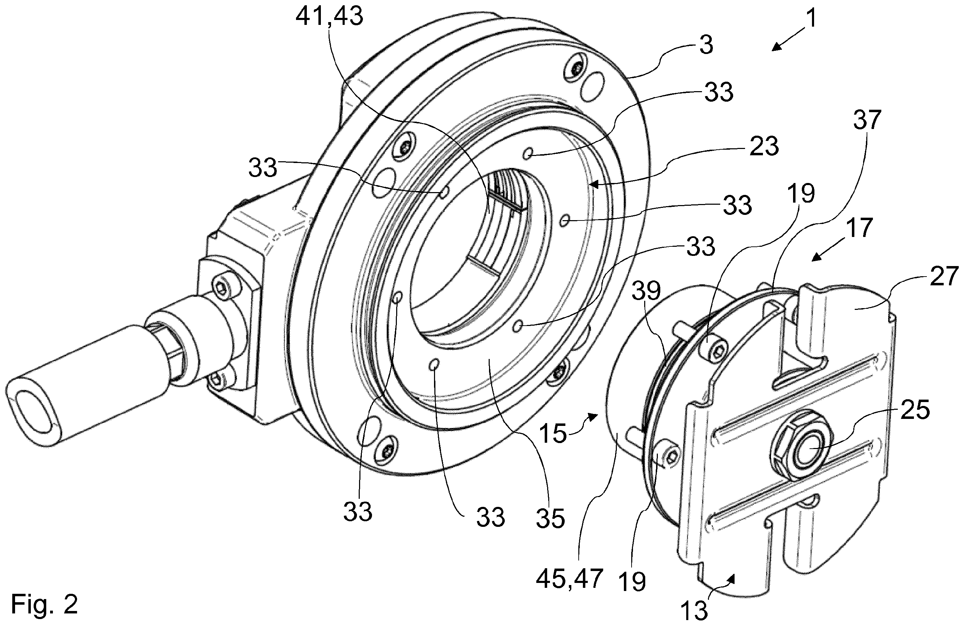

Auf der Innenseite ist ein Lagermodul 17 im Drehgebergehäuse 3 aufgenommen und mittels sechs als Schrauben 19 ausgestalteten Befestigungsmitteln 21 am Drehgebergehäuse 3 befestigt. Aufgrund der Perspektive sind lediglich zwei Befestigungsmittel 21 sichtbar. In anderen Ausgestaltungen können die Befestigungsmittel Stifte, Nieten, Bolzen oder dergleichen sein und in beliebiger Anzahl vorgesehen sein. Ferner kann das Lagermodul 17 auch ein Außengewinde (nicht gezeigt) aufweisen, mittels welchem es in einer Lageraufnahme 23 (siehe Fig. 2) eingeschraubt sein kann. Die Lageraufnahme 23 weist in dieser (nicht gezeigten) Ausgestaltung ein Innengewinde auf.

In einer weiteren nicht gezeigten Ausgestaltung kann das Lagermodul 17 auf der Außenseite 15 des Drehgebers 1 aufgenommen sein. Diese Ausgestaltung kann somit am Schienenfahrzeug befestigt sein und in einem montierten Zustand das Entnehmen und/oder Einsetzen des Lagermoduls 17 zur Außenseite 15 hin erlauben.

Aus dem Lagermodul 17 ragt eine Welle 25 an der mittels eines Befestigungsmittels 21 eine Gabel 27 befestigt ist. Mittels der Gabel 27 kann eine Rotation der Achse des Schienenfahrzeuges auf die Welle 25 übertragen werden, indem ein auf der Achse exzentrisch angebrachter und von der Achse in Achsenrichtung hervorstehender Stift in eine Gabelöffnung 29 oder eine Stiftaufnahme (nicht gezeigt) eingreift.

In Fig. 2 ist der Drehgeber 1 der Fig. 1 gezeigt, wobei das Lagermodul 17 vom Drehgebergehäuse 3 entfernt wurde.

Somit ist in der Fig. 2 die Lageraufnahme 23 einsehbar, in welcher verschiedene Gewindebohrungen 33 sichtbar sind. Diese Gewindebohrungen 33 dienen zur Aufnahme der Schraube 19, mit welcher das Lagermodul 17 am Drehgebergehäuse 3 befestigbar ist.

Ferner ist eine umlaufende Anschlagfläche 35 gezeigt, an welcher ein Flanschabschnitt 37 des Lagermoduls 17, genauer gesagt eines Modulgehäuses 39, im montierten Zustand des Lagermoduls 17 anliegt.

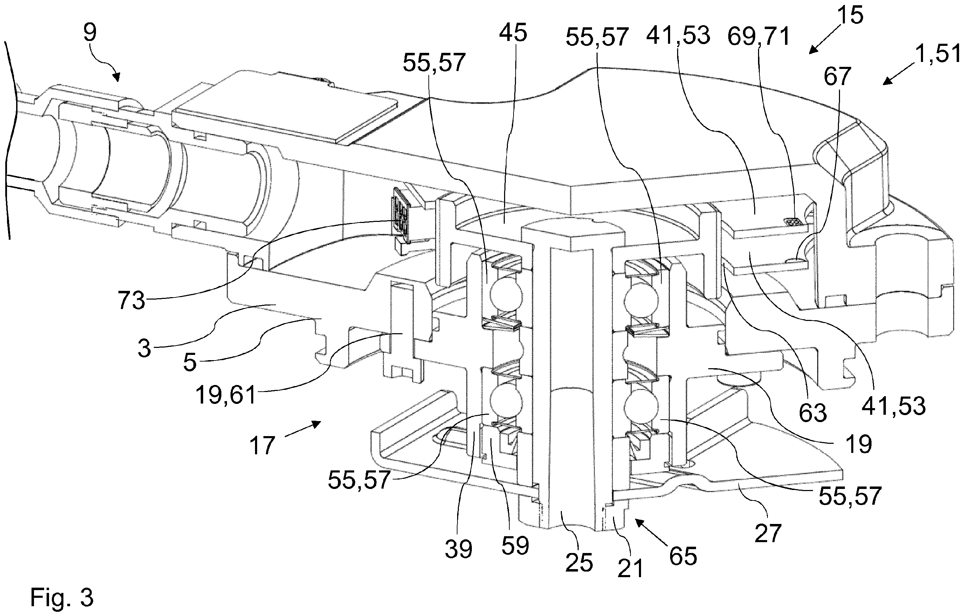

In der Lageraufnahme 23 ist eine als Abtastelektronik 41 ausgestaltete stationäre zweite Abtastkomponente 43 angedeutet. Auf diese wird näher in der Fig. 3 eingegangen.

Auf der Innenseite 13 des Lagermoduls 17 ragt die Welle 25 aus dem Modulgehäuse 39 heraus, um die Gabel 27 aufzunehmen. Auch auf der Außenseite 15 des Lagermoduls 17 ragt in die Welle 25 aus dem Modulgehäuse 39 heraus (dies ist im Fig. 3 gezeigt), wobei an dieser Seite eine als Massverkörperung 45 ausgestaltete bewegliche erste Abtastkomponente 47 an der Welle 25 befestigt ist.

In anderen Ausgestaltungen des erfindungsgemäßen Drehgebers 1 kann eine Abtastelektronik drehbar an der Welle 25 befestigt sein, wobei die Massverkörperung 45 stationär im Drehgebergehäuse 3 vorgesehen sein kann.

In der Fig. 3 ist der erfindungsgemäße Drehgeber 1 im montierten Zustand 51 gezeigt.

Zu erkennen ist hierbei, dass die Welle 25 durch das Modulgehäuse 39 sowohl auf der Innenseite 13, als auch auf der Außenseite 15 hindurchragt. Die Massverkörperung 45 ist mittels des Befestigungsmittels 21 an der Welle 25 befestigt.

Auf der gegenüberliegenden Innenseite 13 dient ein Befestigungsmittel 21 zur Befestigung der Gabel 27.

Ein nicht gezeigtes Schienenfahrzeugbauteil ist auf einer Achse (nicht gezeigt) des Schienenfahrzeuges befestigt und überträgt dessen Rotation über die Gabel 27 auf die Welle 25 des Drehgebers 1. Der Drehgeber 1 kann aber genauso in Personenaufzügen und anderen Vorrichtungen mit eingebaut und verwendet werden.

Die Welle 25 ist mittels als Kugellager 55 ausgestalteter Rotationslager 57 drehbar gelagert. In anderen Ausgestaltungen des erfindungsgemäßen Drehgebers 1 können auch Wälzlager verwendet werden. Die Kombination der Welle 25 mit den Rotationslagern 57 bildet eine Lagermechanik 65 heraus. Die Lagermechanik 65 ist im Lagermodul 17 angeordnet und erfindungsgemäß zusammen mit der ersten Abtastkomponente 47 in das Drehgebergehäuse 3 einsetzbar und/oder aus diesem entfernbar.

In der gezeigten Ausgestaltung schließen die auf der Außenseite 15 angebrachten Kugellager 55 das Modulgehäuse 39 ab. Auf der Innenseite 13 erfolgt dies durch ein Verschlusselement 59. Dieses Verschlusselement 59 erlaubt es das Modulgehäuse 39 zu öffnen, sodass das Rotationslager 57 von außerhalb des Modulgehäuses 39 zugänglich ist.

Zu erkennen ist auch die Schraube 19, welche in einer Befestigungsöffnung 61 (auf der rechten Seite und linken Seite ist jeweils eine Schraube 19 gezeigt) aufgenommen ist und somit das Lagermodul 17 am Drehgebergehäuse 3 zu befestigen.

Die Anschlussvorrichtung 9 ist ohne Verbindungskabel gezeigt, sodass die Abtastelektronik 41 erkennbar ist. Diese ist auf zwei Leiterplatten 53 angeordnet und befindet sich abschnittsweise in der Nähe der Massverkörperung 45, ohne diese jedoch zu berühren.

Die Abtastelektronik 41 bildet in Verbindung mit der Massverkörperung 45 einen Winkellagegeber 63 aus.

Die Abtastelektronik 41 weist ferner einen Zustandssensor 67 auf, der sich rein beispielhaft gezeigt, auf der Leiterplatte 53 befindet. In anderen Ausgestaltungen kann sich der Zustandssensor 67 beispielsweise im Boden 5 des Drehgebergehäuses 3 befinden, wobei dieser datenübertragend mit der Abtastelektronik 41 verbunden ist. Der Zustandssensor 67 erkennt ein entferntes oder eingesetztes Lagermodul 17.

Ferner weist die Abtastelektronik 41 ein beispielhaft als integrierter Schaltkreis 69 dargestelltes Einstellautomatik-Modul 71 auf. Dieses Einstellautomatik-Modul 71 ermöglicht eine automatische Kalibrierung, wenn der Zustandssensor 67 das Einsetzen oder Wiedereinsetzen eines Lagermoduls 17 erkennt. Das Einstellautomatik-Modul 71 weist ferner einen Dateneingang 73 auf, über welchen Kalibrationsdaten an das Einstellautomatik-Modul 71 übertragen werden können.

## Patentansprüche

1. Drehgeber (1) für Schienenfahrzeuge zur Erfassung einer rotatorischen Lage und/oder Lageänderung der Achse eines Schienenfahrzeuges, umfassend
- ein Drehgebergehäuse (3) zur Befestigung des Drehgebers (1) am Schienenfahrzeug;
- eine erste, gegenüber dem Drehgebergehäuse (3) drehbar gelagerte Abtastkomponente (47);
- eine zweite, stationär zum Drehgebergehäuse (3) angeordnete Abtastkomponente (43); und
- eine im Drehgebergehäuse (3) aufgenommene Lagermechanik (65), mit einer Welle (25) und wenigstens einem die Welle (25) drehbar im Drehgebergehäuse (3) lagernden Rotationslager (57), wobei die Welle (25) die erste Abtastkomponente (47) trägt,
**dadurch gekennzeichnet, dass** die Lagermechanik (65) und die erste Abtastkomponente (47) zu einem einteilig in das Drehgebergehäuse (3) einsetzbarem und/oder einteilig von dem Drehgebergehäuse (3) entfernbarem Lagermodul (17) vereint sind.

2. Drehgeber (1) nach Anspruch 1, **dadurch gekennzeichnet, dass** das Lagermodul (17) bei dem an dem Schienenfahrzeug befestigten Drehgeber (1) in das Drehgebergehäuse (3) einsetzbar und/oder vom Drehgebergehäuse (3) entfernbar ausgestaltet ist.

3. Drehgeber (1) nach Anspruch 1 oder 2, **dadurch gekennzeichnet, dass** die erste Abtastkomponente (47) eine Massverkörperung (45) und die zweite Abtastkomponente (43) eine Abtastelektronik (41) oder die erste Abtastkomponente (47) eine Abtastelektronik (41) und die zweite Abtastkomponente (43) eine Massverkörperung (45) ist.

4. Drehgeber (1) nach einem der Ansprüche 1 bis 3, **dadurch gekennzeichnet, dass** das Lagermodul (17) am Drehgebergehäuse (3) lösbar befestigt ist.

5. Drehgeber (1) nach einem der Ansprüche 1 bis 4, **dadurch gekennzeichnet, dass** das Lagermodul (17) in eine Aufnahme (23) des Drehgebergehäuses (3) eingeschraubt ist.

6. Drehgeber (1) nach einem der Ansprüche 1 bis 5, **dadurch gekennzeichnet, dass** die Welle (25) des am Drehgebergehäuse (3) befestigten Lagermoduls (17) zumindest einen exzentrisch zur Welle angebrachten Antriebsstift oder eine zentrisch zur Welle befestigte Gabel (27) aufweist, mit welchem/welcher eine Rotation der Achse des Schienenfahrzeuges auf die Welle (25) des Lagermoduls (17) übertragbar ist.

7. Drehgeber (1) nach einem der Ansprüche 1 bis 6, **dadurch gekennzeichnet, dass** das Lagermodul (17) ein abgedichtetes Modulgehäuse (39) aufweist.

8. Drehgeber (1) nach einem der Ansprüche 1 bis 7, **dadurch gekennzeichnet, dass** bei entferntem Lagermodul (17) und geöffneten Modulgehäuse (39) das Rotationslager (57) von außen zugänglich angeordnet ist.

9. Drehgeber (1) nach Anspruch 7 oder 8, **dadurch gekennzeichnet, dass** sich die erste Abtastkomponente (47) in einem geschlossenen Zustand des Modulgehäuses (39) zumindest abschnittsweise außerhalb von diesem befindet.

10. Drehgeber (1) nach einem der Ansprüche 1 bis 9, **dadurch gekennzeichnet, dass** das Lagermodul (17) in einer vorbestimmten rotatorischen Stellung in das Drehgebergehäuse (3) einsetzbar ist.

11. Drehgeber (1) nach einem der Ansprüche 1 bis 10, **dadurch gekennzeichnet, dass** die Abtastelektronik (41) datenübertragend mit einem Zustandssensor (67) zur Erkennung eines entfernten oder eingesetzten Lagermoduls (17) verbunden ist, wobei die Abtastelektronik (41) ein Einstellautomatik-Modul (71) aufweist und wobei das Einstellautomatik-Modul (71) ausgestaltet ist nach einem Einsetzen oder Wiedereinsetzen eines Lagermoduls (17) eine automatische Kalibrierung durchzuführen.

12. Drehgeber (1) nach Anspruch 11, **dadurch gekennzeichnet, dass** das Einstellautomatik-Modul (71) einen Dateneingang (73) zur Einspeisung von Kalibrationsdaten an das Einstellautomatik-Modul (71) aufweist.

## Claims

1. Encoder (1) for rail vehicles for detecting a rotational position and/or change in position of the axle of a rail vehicle, comprising
- an encoder housing (3) for mounting the encoder (1) on the rail vehicle;
- a first scanning component (47) rotatably mounted relative to the encoder housing (3);
- a second scanning component (43) mounted so that it is stationary relative to the encoder housing (3); and
- a bearing mechanism (65) mounted in the encoder housing (3), with a shaft (25) and at least one rotary bearing (57) rotatably supporting the shaft (25) in the encoder housing (3), the shaft (25) carrying the first scanning component (47),
**characterized in that** the bearing mechanism (65) and the first scanning component (47) are combined to form a bearing module (17) which can be inserted into the encoder housing (3) in one piece and/or removed from the encoder housing (3) in one piece.

2. Encoder (1) in accordance with Claim 1, **characterized in that** the bearing module (17) in the encoder (1) mounted on the rail vehicle is designed so that it can be inserted into the encoder housing (3) and/or removed from the encoder housing (3).

3. Encoder (1) in accordance with Claim 1 or 2, **characterized in that** the first scanning component (47) is a measuring element (45) and the second scanning component (43) is a scanning electronic device (41) or the first scanning component (47) is a scanning electronic device (41) and the second scanning component (43) is a measuring element (45).

4. Encoder (1) in accordance with any one of Claims 1 to 3, **characterized in that** the bearing module (17) is detachably mounted on the encoder housing (3).

5. Encoder (1) in accordance with any one of Claims 1 to 4, **characterized in that** the bearing module (17) is screwed into a holder (23) on the encoder housing (3).

6. Encoder (1) in accordance with any one of Claims 1 to 5, **characterized in that** the shaft (25) of the bearing module (17) mounted on the encoder housing (3) has at least one drive pin mounted eccentrically relative to the shaft or one fork (27) mounted centrally relative to the shaft, by means of which a rotation of the axle of the rail vehicle can be transmitted to the shaft (25) of the bearing module (17).

7. Encoder (1) in accordance with any one of Claims 1 to 6, **characterized in that** the bearing module (17) has a sealed module housing (39).

8. Encoder (1) in accordance with any one of Claims 1 to 7, **characterized in that,** with the bearing module (17) removed and the module housing (39) open, the rotary bearing (57) is accessible from the outside.

9. Encoder (1) in accordance with Claim 7 or 8, **characterized in that** the first scanning component (47) is located at least in sections outside the module housing (39) when said housing is closed.

10. Encoder (1) in accordance with any one of Claims 1 to 9, **characterized in that** the bearing module (17) can be inserted into the encoder housing (3) in a predefined rotational position.

11. Encoder (1) in accordance with any one of Claims 1 to 10, **characterized in that** the scanning electronic device (41) is connected in a data-transmitting manner to a status sensor (67) for detecting a removed or inserted bearing module (17), the scanning electronic device (41) having an automatic adjustment module (71), and said automatic adjustment module (71) being designed to carry out automatic calibration after insertion or reinsertion of a bearing module (17).

12. Encoder (1) in accordance with Claim 11, **characterized in that** the automatic adjustment module (71) has a data input (73) for feeding calibration data to the automatic adjustment module (71).

## Revendications

1. Codeur (1) pour véhicules ferroviaires permettant de détecter une position rotative et/ou un changement de position de l'essieu d'un véhicule ferroviaire, comprenant
- un boîtier de codeur (3) permettant de fixer le codeur (1) sur le véhicule ferroviaire ;
- un premier composant de détection (47) monté rotatif en face du boîtier de codeur (3) ;
- un second composant de détection (43) disposé de manière fixe par rapport au boîtier de codeur (3) ; et
- un mécanisme de palier (65) logé dans le boîtier de codeur (3), avec un axe (25) et au moins un palier de rotation (57) montant de manière rotative l'axe (25) dans le boîtier de codeur (3), l'axe (25) supportant le premier composant de détection (47),
**caractérisé en ce que** le mécanisme de palier (65) et le premier composant de détection (47) sont réunis en un module de palier (17) insérable d'une seule pièce dans le boîtier de codeur (3) et/ou retirable d'une seule pièce du boîtier de codeur (3).

2. Codeur (1) selon la revendication 1, **caractérisé en ce que** le module de palier (17) est conçu pour pouvoir être inséré dans le boîtier de codeur (3) et/ou être retiré du boîtier de codeur (3) près du codeur (1) fixé sur le véhicule ferroviaire.

3. Codeur (1) selon la revendication 1 ou 2, **caractérisé en ce que** le premier composant de détection (47) est un étalon de mesure (45) et le second composant de détection (43) un système électronique de détection (41) ou le premier composant de détection (47) est un système électronique de détection (41) et le second composant de détection (43) un étalon de mesure (45).

4. Codeur (1) selon l'une des revendications 1 à 3, **caractérisé en ce que** le module de palier (17) est fixé amovible sur le boîtier de codeur (3).

5. Codeur (1) selon l'une des revendications 1 à 4, **caractérisé en ce que** le module de palier (17) est vissé dans un logement (23) du boîtier de codeur (3).

6. Codeur (1) selon l'une des revendications 1 à 5, **caractérisé en ce que** l'axe (25) du module de palier (17) fixé sur le boîtier de module (3) présente au moins une goupille d'entraînement disposée de manière excentrée par rapport à l'axe ou une fourche (27) fixée de manière centrée par rapport à l'axe, avec laquelle une rotation de l'essieu du véhicule ferroviaire peut être transmise à l'axe (25) du module de palier (17).

7. Codeur (1) selon l'une des revendications 1 à 6, **caractérisé en ce que** le module de palier (17) présente un boîtier de module (39) étanche.

8. Codeur (1) selon l'une des revendications 1 à 7, **caractérisé en ce que,** lorsque le module de palier (17) est retiré et que le boîtier de module (39) est ouvert, le palier de rotation (57) est disposé de manière accessible de l'extérieur.

9. Codeur (1) selon la revendication 7 ou 8, **caractérisé en ce que** le premier composant de détection (47) se trouve dans un état fermé du boîtier de module (39) au moins par sections à l'extérieur de celui-ci.

10. Codeur (1) selon l'une des revendications 1 à 9, **caractérisé en ce que** le module de palier (17) est insérable dans une position rotative prédéfinie dans le boîtier de codeur (3).

11. Codeur (1) selon l'une des revendications 1 à 10, **caractérisé en ce que** le système électronique de détection (41) est raccordé pour le transfert de données à un capteur d'état (67) permettant de détecter un module de palier (17) retiré ou inséré, le système électronique (41) présentant un module d'automatisme de réglage (71) et le module d'automatisme de réglage (71) étant conçu pour réaliser un étalonnage automatique après l'insertion ou la réinsertion d'un module de palier (17).

12. Codeur (1) selon la revendication 11, **caractérisé en ce que** le module d'automatisme de réglage (71) présente une entrée de données (73) pour l'alimentation des données d'étalonnage au module d'automatisme de réglage (71).
